# EUROPEAN PATENT APPLICATION

(11) **EP 1 343 103 A2**
(43) Date of publication of application: **10.09.2003**
(21) Application number: 02259041.8
(22) Date of filing: 31.12.2002
(51) Int. Cl.: G06F 17/60

(54) **Electronic mail retrieval**

(30) Priority: 22.01.2002 US 54771
(71) Applicant: Openwave Systems Inc., Redwood City, CA 94063 (US)
(72) Inventor: Brown, Bruce Loring Jr., Goleta, California 93117 (US); Ellsworth, Benjamin Jonathan Solomon, Goleta, California 93117 (US)
(74) Representative: W.P. Thompson & Co.

(57) **Abstract**

According to one embodiment, the invention provides a method for operating an electronic mail server system having mailboxes associated with message client devices. The method comprises receiving input to change a mailbox, said input comprising a request to change an organizational structure of the mailbox; making changes to the mailbox in response to said input; and sending a message to a message client device associated with the mailbox, the message comprising information to allow the message client device to synchronize a cached version of the mailbox stored locally in the message client device with the mailbox.

## Description

### FIELD OF THE INVENTION

This field relates to electronic messaging. In particular, it relates to the retrieval of electronic mail messages by a message client device from an electronic mail server system.

### BACKGROUND

Today mobile or wireless message client devices, such as mobile telephones, Personal Digital Assistants (PDAs), pocket PCs, notebook computers, etc., may be used to send and receive electronic (e-mail) messages.

With current e-mail server systems of which the inventors are aware, in order to read new mail messages, a user of a message client device would first have to request the new mail messages from the e-mail server system. This involves establishing a network connection between the message client device and the e-mail server system and waiting while new messages are retrieved from the system. As this involves waiting, the quality of the user's experience may be seriously impaired by the latent time (latency) required to download a new mail message over a slow network connection before the message may be viewed. This is a problem even with e-mail server systems which push new mail notifications to a message client device.

### SUMMARY OF THE INVENTION

One aspect of the invention provides a method for operating an electronic mail server system having mailboxes associated with client devices. The method comprises receiving input to change a mailbox, the input comprising a request to change an organizational structure of the mailbox; making changes to the mailbox in response to the input; and sending a message to a message client device associated with a mailbox, the message comprising information to allow the message client device to synchronize a cached version of the mailbox stored locally in the message client device with the mailbox.

In accordance with a second aspect of the present invention there is a computer program product, or a computer-readable medium having stored thereon a sequence of instructions, which when executed by a processing system causes said system to perform a method comprising:
receiving input to change a mailbox, said input comprising a request to change an organizational structure of said mailbox;
making changes to said mailbox in response to said input; and
sending a message to a message client device associated with said mailbox, said message comprising information to allow said message client device to synchronize a cached version of said mailbox stored locally in said message client device with said mailbox.

In accordance with a third aspect of the present invention there is a computer program product or a computer-readable medium having stored thereon a sequence of instructions which when executed by a processing system cause said system to perform a method comprising:
receiving a client message;
checking if said client message is a mail notification message; and
if said client message is a mail notification message then decoding said message to obtain message access protocol parameters; connecting to a mail server and synchronizing a cached mailbox stored locally in said message client device with an associated mailbox stored in said mail server using said message access protocol parameters, wherein said synchronizing comprises retrieving changes to an organizational structure of said associated mailbox, and updating said cached mailbox in response; and notifying a user of said message client device of new mail messages received during said synchronization.

Preferably said synchronizing further comprises retrieving new mail from said associated mailbox; and storing said new mail in said cached mailbox.

In accordance with a fourth aspect of the present invention there is electronic mail server system having mailboxes associated with message client devices, said system comprising:
means for receiving input to change a mailbox, said input comprising a request to change an organizational structure of said mailbox;
means for making changes to said mailbox in response to said input; and
means for sending a message to a message client device associated with said mailbox, said message comprising information to allow said message client device to synchronize a cached version of said mailbox stored locally in said message client device with said mailbox.

In accordance with a fifth aspect of the present invention there is message client device comprising:
means for receiving a client message;
means for checking if said client message is a mail notification message; and
means for decoding said client message if it is a mail notification message thereby to obtain message access protocol parameters;
means for connecting to a mail server and synchronizing a cached mailbox stored locally in said message client device with an associated mailbox stored in said mail server using said message access protocol parameters, wherein said synchronizing comprises retrieving changes to an organizational structure of said associated mailbox and updating said cached mailbox in response; and
means for notifying a user of said message client device of new mail messages received during said synchronizing.

### BRIEF DESCRIPTION OF THE DRAWINGS

**Figure 1** shows an example of a network environment in which embodiments of the present may be practiced;

**Figure 2** of the drawings shows a flowchart of operations performed by an e-mail server system in accordance with one embodiment of the invention;

**Figure 3** of the drawings shows a flowchart of operations performed by a message client device in accordance with one embodiment of the invention;

**Figure 4** of the drawings illustrates operations that occur when an external MTA server sends a message to an e-mail server system in accordance with the invention;

**Figure 5** of the drawings illustrates a typical interaction between a message client device and an IMAP server in accordance with one embodiment of the invention;

**Figure 6** shows a block diagram of a server which could be a server in the e-mail server system of Figure 4, or an SMS server; and

**Figure 7** shows a block diagram of a message client device in the form of a mobile telephone.

### DETAILED DESCRIPTION

Broadly, described herein is an electronic mail (e-mail) server system having a number of mailboxes associated with message client devices such as mobile telephones, notebook computers, Personal Digital Assistants (PDAs), or pocket PCs. Each such message client device typically stores a local cached version of its associated mailbox (in the e-mail server system). In accordance with embodiments of the invention, the electronic mail server system operates to receive input to change a mailbox, the input comprising a request to change an organizational structure of the mailbox, typically a folder structure of the mailbox. The input may also include a new mail message. In response to the input, the electronic mail server system makes appropriate changes to the mailbox and sends a message to a message client device associated with the mailbox. The message comprises information to allow the message client device to synchronize the associated cached version of the mailbox.

According to another embodiment of the invention, a message client device is disclosed which, in response to receiving the aforesaid message from the electronic mail server system, checks if the message is a mail notification message. If the message is a mail notification message then the device decodes the message to obtain message access protocol parameters. The message client device then connects to the e-mail server system and synchronizes its cached mailbox with its associated mailbox in the e-mail server system using the message access protocol parameters. Synchronizing the cached mailbox comprises retrieving changes to an organizational structure of the associated mailbox and updating the cached mailbox in response. Synchronizing the cached mailbox may also include retrieving new mail from the associated mailbox and storing the new mail in the cached mailbox. Thereafter, the message client device notifies a user of the device of new mail messages received during the synchronization.

In the embodiments of the invention described above, messages sent by the e-mail server system can be sent via a Short Message Service (SMS) and the message access protocol is the Internet Message Access Protocol (IMAP). Other protocols may be used in other embodiments.

In a further embodiment, the electronic mail server system only sends a message as described above if a message client device is subscribed to receive the message.

It will be appreciated that one advantage of the technique described herein is that subscribed message client devices are able to asynchronously synchronize a local cached mailbox with a corresponding mailbox stored in an electronic mail server system and to notify a user of new mail received during the synchronization. This allows the user to view the new mail instantaneously without having to wait for the message client device to download the new mail. Further, the technique described herein allows a user to manage mail on multiple message client devices wherein changes to an organizational structure of a mailbox stored in an electronic mail server system, for example changes to a mailbox folder structure, are sent to all message client devices having locally stored cached versions of the mailbox in order to effect the changes in the cached versions.

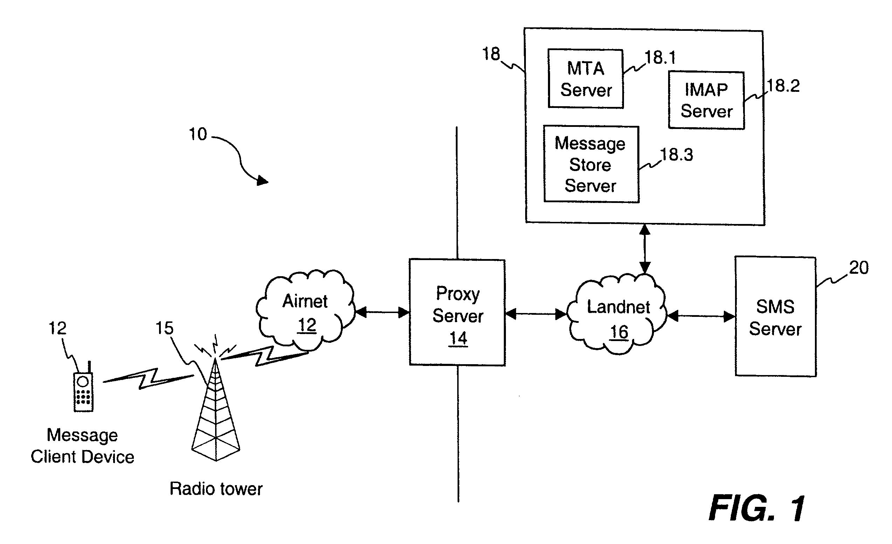

Figure 1 shows a schematic drawing of a network environment 10 in which embodiments of the technique described herein may be practiced. As shown in Figure 1, a message client device 12 communicates with an airnet 12 via a radio tower 15. The message client device 12 may be a mobile telephone, a Personal Digital Assistant (PDA), a pocket PC, a notebook computer, or any other similar device. Airnet 12, may for example, be a network such as a Mobile Digital Packet Data (MDPD) network, a Global System for Mobile (GSM) network, a Code Division Multiple Access (CDMA) network, or a Time Division Multiple Access (TDMA) network. The communications protocol used by the airnet 12 may include, for example, the Wireless Application Protocol (WAP) and/or the hand held device protocol (HDTP).

Airnet 12 connects to a landnet 16 via a proxy server 14. Proxy server 14 serves to convert communications as they pass between airnet 12 and landnet 16 and thus functions as a gateway server. Coupled to landnet 16 is an e-mail server system 18. The e-mail server system 18 is shown to include a Mail Transfer Agent (MTA) server 18.1, an Internet Message Access Protocol (IMAP) server 18.2 and a Message Store Server (MSS) 18.3. The functions of these various servers will be described in greater detail below. A Short Message Service (SMS) server 20 is also shown connected to landnet 16.

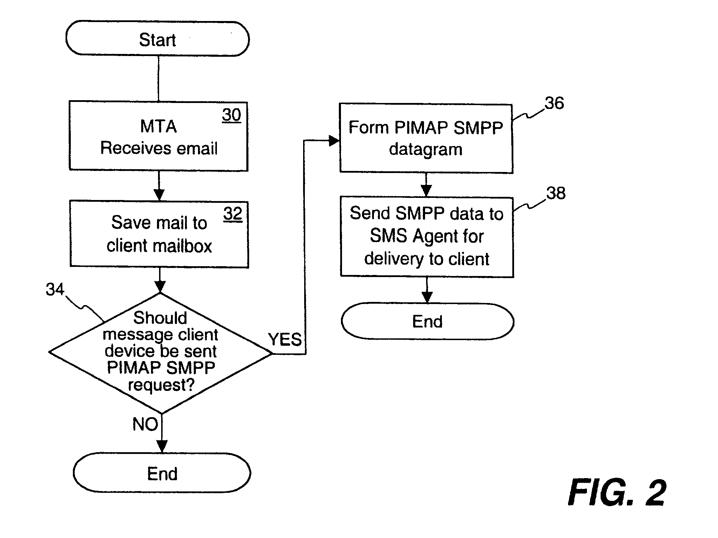

Figure 2 of the drawings show a broad overview of operations performed by the e-mail server system 18 when a new mail message has been received. Referring to Figure 2, at block 30 MTA server 18.1 receives a new e-mail message which may, for example, be a message from an external MTA server. At block 32 the message is saved in a client mailbox associated with a message client device. At block 34 the system 18 determines whether a message client device should be sent a notification that a new mail message has been received. As described above, notification of new e-mail messages are only sent to message client devices which are subscribed to receive mail notifications in accordance with one embodiment of the invention. Typically, the mail notifications are sent in the form of a PIMAP SMPP request, where the acronym PIMAP stands for Pushed IMAP and SMPP refers to the Short Message Peer to Peer Protocol. If the message client device is subscribed to receive mail notifications then at block 36 a PIMAP SMPP datagram is formed and sent to SMS server 20 which runs an SMS agent. In particular, the DELIVER_SM operation is used to carry the PIMAP datagram. *Service_type* is set to the character PIMAP and *short_message* contains the PIMAP payload. In one embodiment the PIMAP payload comprises three fields. The first field is a tag field which specifies the type of data contained in the payload. The remaining fields are called length and value fields. The tag and length field are two octets long, whereas the value field has a variable length which is dependent on the tag field value. To perform a synchronization, the following tags are required, server ID, user ID, and folder ID. For a payload containing a server ID, the tag field value is 0X01, the length field is set to the length of the server ID and the value field contains the name of the server with the mail change. For a user ID payload, the tag value is 0X02, the length field is set to the length of the user ID and the value field contains the user ID or name that the mailbox is registered to. For a payload containing folder ID information, the tag value is 0X03, the length field is set to the length of the folder ID and the value field contains the full canonical folder specification of the folder ID.

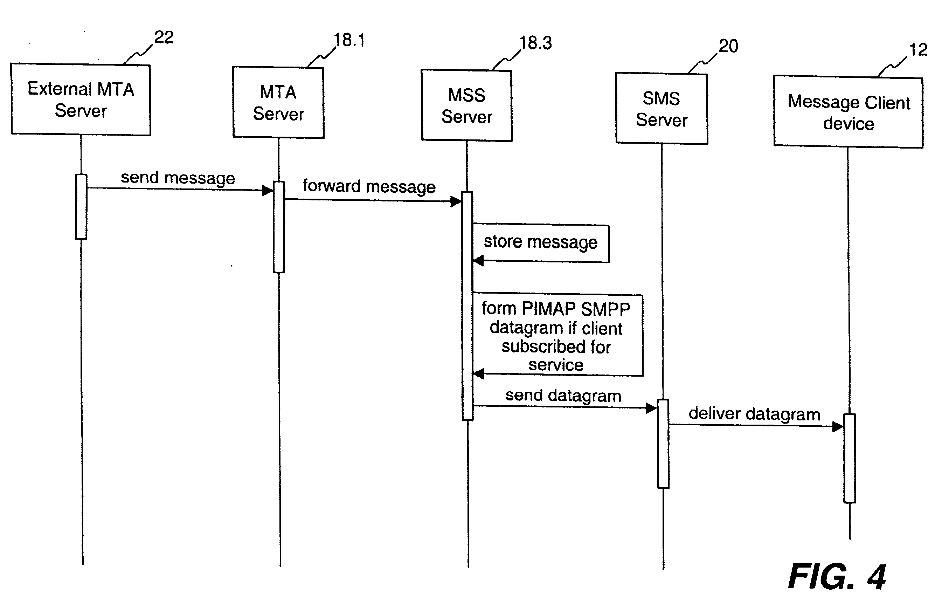

Figure 4 shows the operations shown in Figure 2 in greater detail. Referring to Figure 4, an external MTA server 22 sends a new e-mail message to MTA server 18.1. MTA server 18.1 responds by forwarding the message to the MSS server 18.3 which stores the message in a mailbox associated with a message client device 12. The MSS server 18.3 checks whether the message client device is subscribed to a new mail notification service in accordance with the invention. If the message client device is subscribed then the MSS server 18.3 forms a PIMAP SMPP datagram which contains embedded parameters to be used by message client device 12 in order to retrieve the new mail message from the e-mail server system 18. In accordance with another embodiment of the invention the PIMAP SMPP datagram contains changes to an organizational structure of the mailbox in MSS server 18.3. For example, changes to folders in the mailbox such as changes in folder names, the creation of new folders or the deletion of existing folders are embedded in the PIMAP SMPP datagram. This information is used to effect corresponding changes in a cached version of the mailbox in the message client device 12. Finally, MSS server 18.3 sends the PIMAP SMPP datagram to SMS server 20. SMS server 20 runs a SMS agent which delivers the datagram to message client device 12.

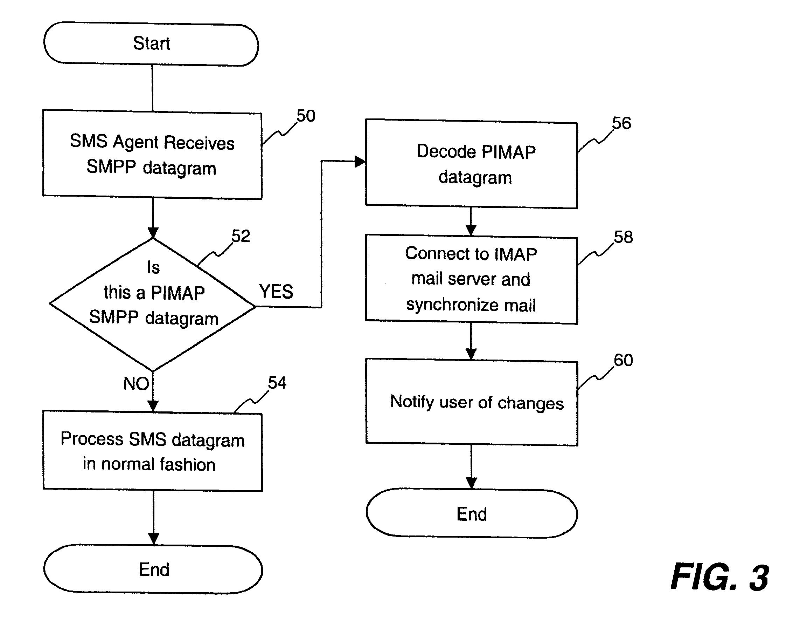

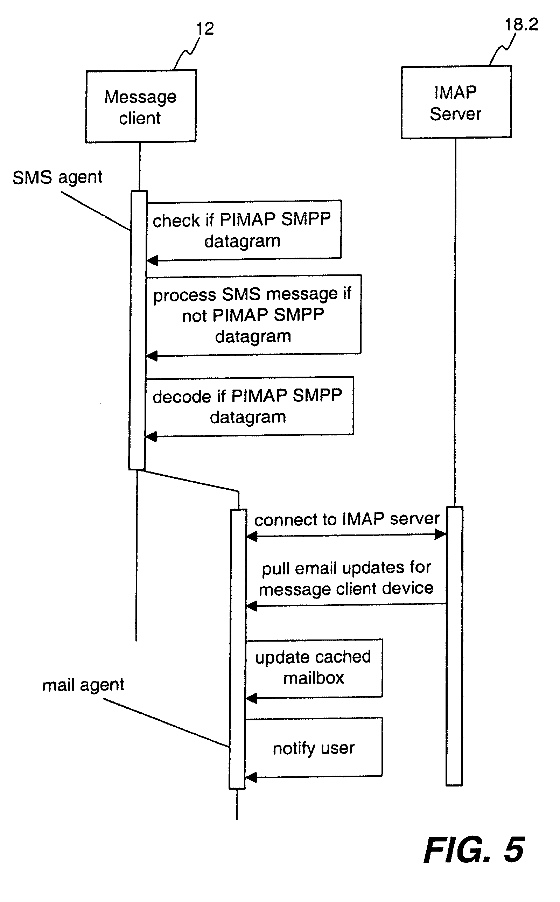

Referring now to Figure 3 of the drawings, operations performed by message client device 12 upon receipt of the PIMAP SMPP datagram are shown in broad overview. Referring to Figure 3, an SMS agent running in the message client device 12 receives an SMPP datagram. At block 52 the SMS agent determines if the datagram is a PIMAP SMPP datagram. If it is not such a datagram then at block 54 the SMS agent processes the datagram in normal fashion as it would any other SMS datagram. However, if it is determined that the datagram is a PIMAP SMPP datagram then at block 56 the datagram is decoded by the SMS agent and at block 58 a mail client agent running in the message client device connects to IMAP server 18.2 and synchronizes a locally stored cached version of the mailbox stored by MSS server 18.3. At block 60 a user of the message client device is notified of new mail received during the synchronization. Figure 5 of the drawings shows the operations of Figure 3 in greater detail.

Referring now to Figure 5, the SMS agent running in message client device 12 checks if the datagram received is a PIMAP SMPP datagram. If it is not a PIMAP SMPP datagram then the datagram is processed as a normal SMS message, otherwise, the PIMAP SMPP datagram is decoded. A mail client agent running in the message client device then connects to IMAP server 18.2 and pulls or retrieves e-mail updates for the message client device from IMAP server 18.2. The mail client agent then updates the cached mailbox in message client device 12 and notifies a user thereof of any new mail messages received.

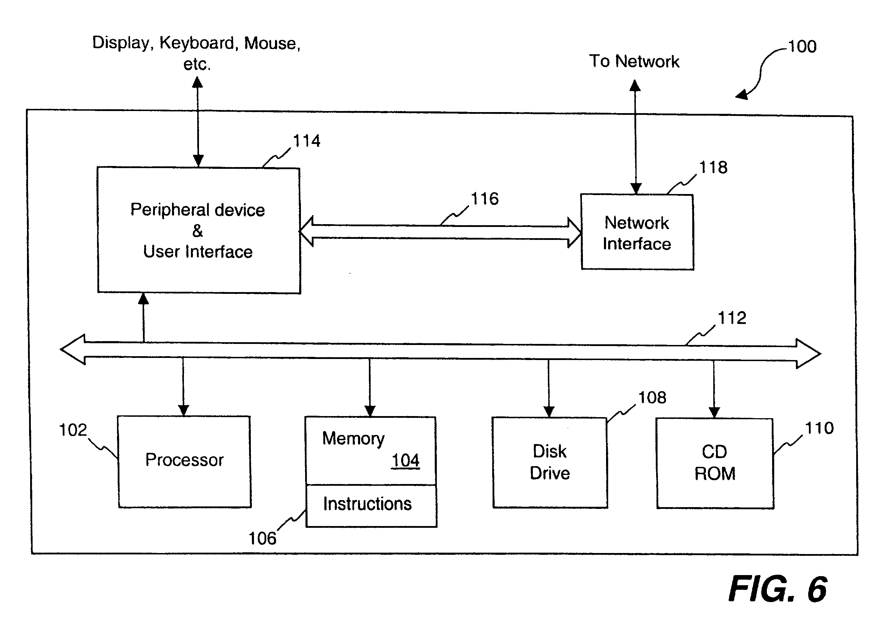

Referring now to Figure 6 of the drawings, reference numeral 100 generally indicates an example of hardware that may be used to implement each of the servers 18.1, 18.2, 18.3 and 20. The hardware 100 includes a memory 104, which may represent one or more physical memory devices, which may include any type of random access memory (RAM), read only memory (ROM) which may be programmable, flash memory, non-volatile mass storage device, or a combination of such memory devices. The memory 104 is connected via a system bus 112 to a processor 102. The memory 104 includes instructions 106 which when executed by the processor 102 cause the processor to perform the methodology of the invention as discussed above. Additionally, the system 100 includes a disk drive 108 and a CD ROM drive 110 each of which is coupled to a peripheral-device and user-interface 114 via bus 112. Processor 102, memory 104, disk drive 108 and CD ROM 110 are generally known in the art. Peripheral-device and user-interface 114 provides an interface between system bus 112 and components connected to a peripheral bus 116 as well as to user interface components, such as a display, mouse and other user interface devices. Processor 102 can be or include any one or more of general or special purpose programmable mircoprocessor, application specific integrated circuit (ASIC), programmable logic device (PLD), etc. These user interface components are optional. A network interface 118 is coupled to peripheral bus 116 and provides network connectivity to system 100.

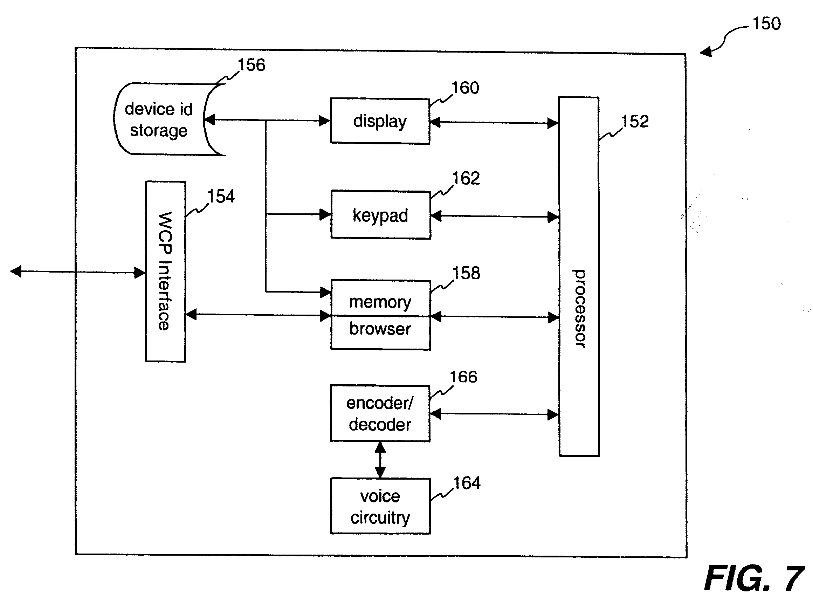

Referring now to Figure 7 of the drawings, the principle components of a message client device in accordance with one embodiment of the invention, in the form of a mobile telephone 150, are shown schematically. The mobile telephone 150 includes a processor 152 which may be or may include any of: a general-or-special purpose programmable microprocessor, Digital Signal Processor (DSP), Application Specific Integrated Circuits (ASIC), Programmable Logic Array (PLA), Field Programmable Gate Array (FPGA), etc., or a combination thereof. The mobile telephone 150 includes a Wireless Control Protocol (WCP) interface 154 that couples to a carrier network via airnet 12 to receive incoming and outgoing signals. Device identifier (ID) storage 156 stores and supplies to WCP interface 154 a device ID which identifies mobile phone 150 to outside entities (e.g. proxy server 14). The device ID is a specific code that is associated with mobile telephone 150 and directly corresponds to the device in the user account typically provided in an associated proxy server device, such as proxy server 14.

In addition, mobile telephone 150 includes memory 158 that stores data and/or software for performing many of the processing tasks performed by the mobile device 150 when executed by the processor 152. In particular, memory 158 stores a cached version of a corresponding mailbox stored in MSS server 18.3. Typically, these processing tasks include: establishing a communications session with proxy server 14 via a wireless link to airnet 12; and requesting and receiving data from e-mail server system 18 via proxy server 14. Hence, memory 158 may represent one or more physical memory devices, which may include any type of Random Access Memory (RAM), Read-Only Memory (ROM), (which may be programmable), flash memory, non-volatile mass storage device, or a combination of such memory devices. Memory device 158 is also coupled to WCP interface 154 for the establishment of the communications sessions with e-mail server system 18 via proxy server 14 as described above. Mobile telephone 150 further includes a display 160 and a keypad 162. Mobile telephone 150 also includes voice circuitry 164 for inputting and outputting audio, and an encoder/decoder 166 coupled between processor 152 and voice circuitry 164 for encoding and decoding audio signals.

For the purposes of this specification, a machine-readable medium includes any mechanism that provides (i.e. stores and/or transmits) information in a form readable by a machine (e.g. computer) for example, a machine-readable medium includes read-only memory (ROM); random access memory (RAM); magnetic disk storage media; optical storage media; flash memory devices; electrical, optical, acoustical or other form of propagated signals (e.g. carrier waves, infra red signals, digital signals, etc.); etc.

It will be apparent from this description the aspects of the present invention may be embodied, at least partly, in software. In other embodiments, hardware circuitry may be used in combination with software instructions to implement the present invention. Thus, the techniques are not limited to any specific combination of hardware circuitry and software.

Although the present invention has been described with reference to specific exemplary embodiments, it will be evident that the various modification and changes can be made to these embodiments without departing from the broader spirit of the invention as set forth in the claims. Accordingly, the specification and drawings are to be regarded in an illustrative sense rather than in a restrictive sense.

## Claims

1. A method for operating an electronic mail server system having mailboxes associated with message client devices, the method comprising:
receiving input to change a mailbox, said input comprising a request to change an organizational structure of said mailbox;
making changes to said mailbox in response to said input; and
sending a message to a message client device associated with said mailbox, said message comprising information to allow said message client device to synchronize a cached version of said mailbox stored locally in said message client device with said mailbox.

2. The method of claim 1, wherein said input further comprises a new mail message.

3. The method of claim 1, further comprising checking whether said message client device is subscribed to receive said message; and sending said message only if said message client device is so subscribed.

4. The method of claim 1, wherein said information comprises information to update mail folders in said cached version of said mailbox.

5. The method of claim 2, wherein said information comprises parameters required by a message access protocol to allow said message client device to retrieve said new mail message from said mailbox.

6. The method of claim 5, wherein said message access protocol comprises the Internet Message Access Protocol (IMAP).

7. The method of claim 1, wherein said message is sent using a Short Message Service (SMS).

8. The method of claim 4, wherein said information to update said mail folders comprises a request selected from a group comprising a request to add, remove, and rename folders in said cached version of said mailbox.

9. A method for operating a message client device, said method comprising:
receiving a client message;
checking whether said client message is a mail notification message; and
if said client message is a mail notification message, then decoding said message to obtain message access protocol parameters; connecting to a mail server and synchronizing a cached mailbox stored locally in said message client device with an associated mailbox stored in said mail server using said message access protocol parameters, wherein said synchronizing comprises retrieving changes to an organizational structure of said associated mailbox and updating said cached mailbox in response; and notifying a user of said message client device of new mail messages received during said synchronization.

10. The method of claim 9, wherein said synchronizing further comprises retrieving new mail from said associated mailbox; and storing said new mail in said cached mailbox.

11. The method of claim 9, wherein said message access protocol is the Internet Message Access Protocol (IMAP).

12. The method of claim 9, wherein said message is a message sent via a Short Message Service (SMS).

13. An electronic mail server system having mailboxes associated with message client devices, said system comprising:
a receiving mechanism to receive input to change a mailbox, said input comprising a request to change an organizational structure of said mailbox; and
a transmitting mechanism to transmit a message to a message client device associated with said mailbox, said message comprising information to allow said message client device to synchronize a cached version of said mailbox stored locally in said message client device with said mailbox.

14. The server system of claim 13, wherein said input further comprises a new mail message.

15. The server system of claim 13, further comprising a checking mechanism to check if said message client device is subscribed to receive said message, said transmitting mechanism then operating to transmit said message only if said message client device is so subscribed.

16. The server system of claim 13, wherein said information comprises information to update mail folders in said cached version of said mailbox.

17. The server system of claim 14, wherein said information comprises parameters required by a message access protocol to allow said message client device to retrieve said new mail message from said mailbox.

18. The server system of claim 17, wherein said message access protocol comprises the Internet Message Access Protocol (IMAP).

19. The server system of claim 13, wherein said message is sent using a Short Message Service (SMS).

20. The server system of claim 16, wherein said information to update said mail folders comprises a request selected from a group comprising a request to add, remove, and rename folders in said cached version of said mailbox.

21. A message client device comprising:
a receiving mechanism to receive a client message;
a checking mechanism to check if said client message is a mail notification message;
a decoding mechanism to decode said client message if it is a mail notification message thereby to obtain message access protocol parameters;
a connection mechanism to connect to a mail server to synchronize a cached mailbox stored locally in said message client device with an associated mailbox stored in said mail server using said message access protocol parameters, wherein said synchronizing comprises retrieving changes to an organizational structure of said associated mailbox and updating said cached mailbox in response; and
a notification mechanism to notify a user of said message client device of new mail messages received during said synchronization.

22. The client device of claim 21, wherein said synchronizing further comprises retrieving new mail from said associated mailbox; and storing said new mail in said cached mailbox.

23. The client device of claim 21, wherein said message access protocol is the Internet Message Access Protocol (IMAP).

24. The client device of claim 23, wherein said message is a message sent via a Short Message Service (SMS).
